(19) Europäisches Patentamt
European Patent Office
Office européen des brevets

(11) Publication number: 0 091 616
B1

(12) EUROPEAN PATENT SPECIFICATION

(45) Date of publication of the patent specification: 25.09.85

(51) Int. Cl.[4]: A 01 N 31/16, A 01 N 37/52, A 01 N 41/02, A 01 N 41/04, A 01 N 47/22, A 01 N 55/04, A 01 N 57/12 // (A01N31/16, 31:04), (A01N37/52, 31:16), (A01N41/02, 31:16), (A01N41/04, 31:16), (A01N47/22, 31:16), (A01N55/04, 31:16), (A01N57/12, 31:16)

(21) Application number: 83103195.0

(22) Date of filing: 30.03.83

# (54) Acaricide compositions.

(30) Priority: 01.04.82 IT 2052682

(43) Date of publication of application: 19.10.83 Bulletin 83/42

(45) Publication of the grant of the patent: 25.09.85 Bulletin 85/39

(84) Designated Contracting States: AT BE CH DE FR GB LI LU NL

(56) References cited: EP - A - 0 037 092

(73) Proprietor: Montedison S.p.A., 31, Foro Buonaparte, I-20121 Milan (IT)

(72) Inventor: Regiroli, Giovanni, 1/B, via Gran Paradiso, I-20026 Novate Milanese, Milan (IT)
Inventor: Caprioli, Vincenzo, 8, via Loriga, San Martino Pavia (IT)
Inventor: Longoni, Angelo, 16, via Melzi d'Eril, Milan (IT)

(74) Representative: Weinhold, Peter, Dr. et al, Patentanwälte Dr. V. Schmied-Kowarzik Dipl.-Ing. G. Dannenberg Dr. P. Weinhold Dr. D. Gudel Dipl.-Ing. S. Schubert Dr. P. Barz Siegfriedstrasse 8, D-8000 München 40 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 091 616 B1

## Description

The present invention concerns acaricidal compositions and more particularly it relates to acaricidal compositions containing as an active ingredient a mixture of two acaricides developing a synergistic effect. The invention concerns, moreover, the use of such compositions in the protection of useful plants from mite infestation.

In European Patent Application No. 37092 (Montedison S.p.A.), there have been described acaricides endowed with a high activity mainly developed against mite eggs but also against adult mites.

Amongst these acaricides there is also the compound 1-decyloxy-4-[(7-oxa-4-octinyl)-oxi]-benzene (henceforth indicated as compound A) of formula:

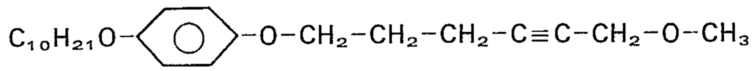

(A)

Compond A, as previously indicated, displays a high acaricidal activity especially against mite eggs.

The acaricidal activity of compound A is so high that its action on the mite eggs allows to disinfest in quite a satisfactory way the plants infested by mites.

It may, however, happen that under particular conditions of heavy infestation occurring on plants of dense foliage, where by it becomes difficult to treat the mite eggs, the immediate efficacy of compound A proves reduced.

In general in such cases there will practically occur a complete disinfestation after a certain time thanks to the persistence of the acaricidal action of compound A, but the high degree of the initial infestation may cause considerable damage to the cultivations.

For this reason we have studied the possibility of combining compound A with a second acaricide endowed with an immediate action against adult mites.

The study of such mixtures has surprisingly shown that the combination of compound A with one of the following acaricides leads to an unforeseeable increase in the acaricidal activity in as much as the activity of the mixtures turns out to be greater than the sum of the activities of the single compounds at equal doses.

Thus it is an object of the present invention to provide mixtures developing synergistic acaricidal activity and consisting of a compound A and of an acaricide chosen from the following list of compounds, in a proportion comprised between 1:10 and 10:1 by weight.

The acaricides that may be used in combination with compound A in the mixtures according to the invention are:

$B_1$ - Tricyclohexyl-tin hydroxide (common name Cyhexatin)

$B_2$ - Hexakis (β-β-dimethylphenethyl)-distannoxane (common name Fenbutatin-oxide)

$B_3$ - N-(4-chloro-o-tolyl)-N',N'-dimethylformamidine (common name Chlordimeform)

$B_4$ - N'-(2,4-dimethylphenyl)-N-[(2,4-dimethylphenyl)-iminomethyl]-N-methylmethanimidamide (common name Amitraz)

$B_5$ - 4-chlorophenyl-4-chlorophenyl-sulphone (common name Chlorfenson)

$B_6$ - 2-(4-tert.butyl-phenoxy)-cyclohexyl-(2-propinyl)-sulphite (common name Propargite)

$B_7$ - N,N-dimethyl-N'-[3-(methylaminocarbonyl-oxy)phenyl]-methanimidamide (common name Formetanate)

$B_8$ - Ethyl O-benzoyl-3-chloro-2,6-dimethylbenzohydroxamate (common name Benzomate)

$B_9$ - 1,1-bis-(4-chlorophenyl)-2,2,2-trichloroethanol (common name Dicofol)

$B_{10}$ - O,O-diethyl-S-(N-isopropylcarbamoylmethyl)-phosphorodithioate (common name Prothoate)

$B_{11}$ - O,O-dimethyl-S-(N-methylcarbamoylmethyl)-phosphorodithioate (common name Dimethoate)

$B_{12}$ - Tricyclohexyl-(1,2,4-triazol-1-yl)-tin (common name Azocyclotin).

Compounds $B_1$ to $B_{12}$ are known compounds which are commercialized as acaricides and some of them also as insecticides.

Further objects of this invention are acaricidal compositions containing the synergistic mixtures of this invention and their use against mite infestations. The synergistic effect of the mixtures object of the present invention can be easily proved in laboratory tests in which it is possible to use separately suitable doses of compound A and of one of compounds B, so as to have a partial acaricide effect and detect the activity increase of the mixtures.

The filed tests which have been carried out show a synergistic effect, even if difficult to be quantified just because of the practical character of the tests which also foresee possible re-infestation by mites that are foreign to the test conducted.

These results show quite clearly how the mixtures which are the object of the present invention, are suited for being used in the protection of plants against mite infestations.

The main mite species, which are especially harmful because of the damage caused to plants and because of their proliferation over all cultivated areas, belong to the families of: *Tetranychidae*, genera *Tetranychus (T. urticae, T. telarius, T. pacificus*, etc.), *Panonychus (P. ulmi, P. citri*, etc.), *Bryobia (B. praetiosa)* and *Oligonychus.*

Other species harmful to the cultivations are present for instance in the family *Eriophydae* (genera *Aceria, Eriophyes, Phylocoptes, Phyllocoptruta, Vasates*, etc.), and *Tenuipalpidae.*

Depending on the species, these mites are parasites of numerous cultivations, amongst which, for instance, fruit trees (particularly apple-tree, pear-tree, peach-tree, apricot-tree and citrus fruit-trees) vine, horticultural cultivations, strawberries, tea, flower and ornamental plants.

Thus, the acaricidal mixtures object of the present invention are suited for numerous and diversified applications both in agriculture as well as in floriculture.

For practical uses the mixtures object of the present invention may be used as such or preferably in the form of suitable compositions.

In the compositions, besides the synergistic mixture as the active principle, there may be also present solid or liquid inert carriers and optionally other additives such as surfactants, suspending agents, emulsifiers, dispersants and adhesive agents.

Moreover, mixtures of the invention are also active against mites infesting foodstuffs. Hence it is possible to use them in the protection of the same.

According to the normal formulation practice, the compositions may be in the form of dry powders, wettable powders, pastes, concentrated emulsions and emulsifiable liquids.

In the above said compositions the acaricidal mixture may be present in quantities comprised between 0.5 and 95% by weight depending on the type of compositions and on the particular use to which the composition is intended for.

The quantity of acaricidal mixture to be spread over the area or onto the vegetation to be protected, depends on various factors such as the type of composition used, the available application means, the nature and degree of infestation, the type of cultivation to be protected, on the climatic and environmental conditions.

In general, for an excellent protection of the cultivations from mite infestations, quantities of between 0.1 and 2 Kg/ha of acaricidal mixture will be sufficient.

If desired, it is possible to prepare an extemporal mixture at the moment of treatment.

Since some of the compounds of type B are also endowed with an insecticide action, it is quite logical to expect that the mixtures of the invention will also show an insecticidal activity.

To the described formulations there may optionally be added other active compatible substances chosen from amongst: insecticides, fungicides, phytoregulators and fertilizers.

Since in European Patent Application No. 37.092, previously cited, besides compound A there are also described other acaricide compounds with analogous properties, it will be likely that one may expect that also the other compounds described in the above cited European Patent Application will show a synergistic effect when used in admixture with the acaricides from $B_1$ to $B_{12}$. With the purpose of even better illustrating the present invention in the following there will be given a number of examples that will concern the acaricidal activity and the synergistic effect of the mixtures object of this invention against mites of the *Tetranychus urticae* and *Panonychus ulmi* species. These mites are particularly well known for the damage they cause to plant as well as for their wide diffusion.

*Example 1:*

Acaricidal activity against *Tetranychus urticae*.

The activity of the single compounds and of the mixtures against the above indicated mite has been determined according to the following procedure.

Small foliar discs obtained from bean leaves, of 4.5 cm diameter, have been infested with adult as well as young mites. After 12 days, that is once there was a mixed population of mobile forms and eggs, the test was started and one part of the discs was treated by sprinkling from a Potter tower with a solution of the products or of the mixtures under examination in aqueous acetone (acetone=10% in volume). Another series of infested discs was treated only with the aqueus acetone mixture, without any active component, as a control.

The results were ascertained after 9 days from the day of treatment and the effectiveness of the single compound or of the mixture was evaluated according to the following formula:

$$E\ (\%) = \left(1 - \frac{T_F \times C_I}{T_I \times C_F}\right) \cdot 100$$

wherein:

E (%) = percentile effectiveness;

$T_F$ = number of mobile forms of mites at the end of the test on the treated discs;

$T_I$ = number of mobile forms at the beginning of the test on discs to be treated;

$C_F$ = number of mobile forms at the end of the test on the untreated discs (control);

$C_I$ = number of mobile forms at the beginning of the test on the discs to be used as a control.

In the following Table 1 there have been recorded the data relating to the effectiveness of the single compounds at the tested doses.

*Table 1*

Effectiveness of single compounds against *T. urticae*

| Compound | Dose (mg/lt) | E (%) |
|---|---|---|
| A | 5<br>10 | 0<br>34 |
| $B_1$ | 2<br>5 | 18<br>50 |
| $B_2$ | 5<br>10 | 5<br>27 |
| $B_3$ | 5<br>10 | 0<br>14 |
| $B_4$ | 5<br>10 | 0<br>29 |
| $B_5$ | 50<br>100 | 0<br>17 |
| $B_6$ | 2<br>5 | 3<br>27 |
| $B_7$ | 50<br>100 | 15<br>42 |

| Compound | Dose (mg/lt) | E (%) |
|---|---|---|
| $B_8$ | 50<br>100 | 8<br>44 |
| $B_9$ | 10<br>50 | 10<br>31 |
| $B_{10}$ | 5<br>10 | 13<br>35 |
| $B_{11}$ | 5<br>10 | 5<br>29 |
| $B_{12}$ | 2<br>5 | 14<br>46 |

On the following Table 2 have been recorded the data relating to the acaricide effectiveness observed in the mixtures compared to the activity expected in the case of simple additive properties.

*Table 2*

Effectiveness of the mixtures against *T. urticae*

| Mixture | Dose A (mg/lt) | Dose B (mg/lt) | Ratio by weight A:B | $E_A+E_B$ (1) (%) | $E_M$ (2) (%) |
|---|---|---|---|---|---|
| $A+B_1$ | 5<br>5<br>10 | 5<br>5<br>5 | 2.5:1<br>1:1<br>2:1 | 18<br>50<br>84 | 63<br>84<br>100 |
| $A+B_2$ | 5<br>10<br>10 | 10<br>10<br>5 | 1:2<br>1:1<br>2:1 | 27<br>61<br>39 | 45<br>89<br>59 |
| $A+B_3$ | 5<br>10<br>10 | 10<br>10<br>5 | 1:2<br>1:1<br>2:1 | 14<br>48<br>34 | 25<br>87<br>56 |
| $A+B_4$ | 5<br>10<br>10 | 10<br>10<br>5 | 1:2<br>1:2<br>2:1 | 29<br>63<br>34 | 50<br>91<br>58 |
| $A+B_5$ | 10<br>10 | 50<br>100 | 1:5<br>1:10 | 34<br>51 | 53<br>76 |
| $A+B_6$ | 5<br>5<br>10 | 2<br>5<br>5 | 2.5:1<br>1:1<br>2:1 | 3<br>27<br>61 | 33<br>60<br>96 |
| $A+B_7$ | 10<br>10 | 50<br>100 | 1:5<br>1:10 | 49<br>76 | 90<br>100 |
| $A+B_8$ | 10<br>10 | 50<br>100 | 1:5<br>1:10 | 42<br>78 | 57<br>91 |
| $A+B_9$ | 5<br>10<br>10 | 10<br>10<br>50 | 1:2<br>1:1<br>1:5 | 10<br>44<br>65 | 43<br>76<br>90 |
| $A+B_{10}$ | 5<br>5<br>10 | 5<br>10<br>5 | 1:1<br>1:2<br>2:1 | 13<br>35<br>47 | 35<br>79<br>92 |
| $A+B_{11}$ | 5<br>5<br>10 | 5<br>10<br>5 | 1:1<br>1:2<br>2:1 | 5<br>29<br>39 | 25<br>65<br>78 |
| $A+B_{12}$ | 5<br>5<br>10 | 2<br>5<br>5 | 2.5:1<br>1:1<br>2:1 | 14<br>46<br>80 | 53<br>75<br>100 |

Notes to Table 2:
(1) The values of the effectiveness of each product have been recorded on Table 1.
(2) $E_m$=Observed effectiveness of the mixtures.

*Example 2:*

Acaricidal activity against *Panonychus ulmi.* The acaricidal activity of the single compounds and of the mixtures against the above indicated mites has been evaluated according to the following method.

Small discs of 4.5 cm diameter, obtained from apple-tree leaves, were infested with adult mites and juvenile forms of the same.

The test was started 12 days after the day of infestation, when the presence of a mixed population of mites consisting of mobile forms and of eggs is observed on the discs.

One part of infested discs was treated by sprinkling from a Potter tower with an aqueous acetone solution (acetone = 10% by volume) of the products or mixtures under examination.

Another series of infested foliar discs was treated only with the aqueous acetone solution, as a control.

The results were taken 9 days after treatment and the percentual effectiveness of the single compound or of the mixture was evaluated according to the following formula:

$$E\ (\%) = \left(1 - \frac{T_F \times C_I}{T_I \times C_F}\right) \cdot 100$$

wherein:

E (%) = percentile effectiveness;

$T_F$ = number of mobile forms of mites at the end of the test on the treated discs;

$T_I$ = number of mobile forms at the beginning of the test on the treated discs;

$C_F$ = number of mobile forms at the end of the test on the untreated discs (control);

$C_I$ = number of mobile forms at the beginning of the test on the discs to be used as controls.

In the following Table 3 there have been recorded the data relating to the effectiveness of the single compounds at the tested doses. →

*Table 3*

Effectiveness of the single compounds against *P. ulmi*

| Compound | Dose (mg/lt) | E (%) |
|---|---|---|
| A | 5<br>10 | 0<br>31 |
| $B_1$ | 2<br>5 | 10<br>49 |
| $B_2$ | 5<br>10 | 0<br>25 |
| $B_3$ | 5<br>10 | 0<br>7 |
| $B_4$ | 5<br>10 | 0<br>18 |
| $B_5$ | 50<br>100 | 0<br>0 |
| $B_6$ | 2<br>5 | 0<br>21 |
| $B_7$ | 50<br>100 | 10<br>38 |
| $B_8$ | 50<br>100 | 15<br>49 |
| $B_9$ | 10<br>50 | 0<br>27 |
| $B_{10}$ | 5<br>10 | 7<br>21 |
| $B_{11}$ | 5<br>10 | 0<br>18 |
| $B_{12}$ | 2<br>5 | 7<br>38 |

In the following Table 4 have been recorded the data relating to the observed acaricidal effectiveness of the mixtures in comparison with the activity expected in the case of simple additive properties.

*Table 4*

Effectiveness of the mixtures against *P. ulmi*

| Mixture | Dose A (mg/lt) | Dose B (mg/lt) | Ratio by weight A:B | $E_A+E_B$ (1) (%) | $E_M$ (2) (%) |
|---|---|---|---|---|---|
| $A+B_1$ | 5<br>5<br>10 | 2<br>5<br>5 | 2.5:1<br>1:1<br>2:1 | 10<br>49<br>80 | 55<br>87<br>100 |
| $A+B_2$ | 5<br>10<br>10 | 10<br>10<br>5 | 1:2<br>1:1<br>2:1 | 25<br>56<br>31 | 38<br>70<br>49 |
| $A+B_3$ | 5<br>10<br>10 | 10<br>10<br>5 | 1:2<br>1:1<br>2:1 | 7<br>38<br>31 | 28<br>85<br>80 |
| $A+B_4$ | 5<br>10<br>10 | 10<br>10<br>5 | 1:2<br>1:1<br>2:1 | 18<br>49<br>31 | 23<br>85<br>71 |

| Mixture | Dose A (mg/lt) | Dose B (mg/lt) | Ratio by weight A:B | $E_A+E_B$ (1) (%) | $E_M$ (2) (%) |
|---|---|---|---|---|---|
| $A+B_5$ | 10<br>10 | 50<br>100 | 1:5<br>1:10 | 31<br>31 | 58<br>79 |
| $A+B_6$ | 5<br>5<br>10 | 2<br>5<br>5 | 2.5:1<br>1:1<br>2:1 | 0<br>21<br>52 | 35<br>51<br>88 |
| $A+B_7$ | 10<br>10 | 50<br>100 | 1:5<br>1:10 | 41<br>69 | 79<br>100 |
| $A+B_8$ | 10<br>10 | 50<br>100 | 1:5<br>1:10 | 46<br>80 | 80<br>100 |
| $A+B_9$ | 5<br>10<br>10 | 10<br>10<br>50 | 1:2<br>1:1<br>1:5 | 0<br>31<br>58 | 37<br>51<br>84 |
| $A+B_{10}$ | 5<br>5<br>10 | 5<br>10<br>5 | 1:1<br>1:2<br>2:1 | 7<br>21<br>38 | 29<br>71<br>89 |
| $A+B_{11}$ | 5<br>5<br>10 | 5<br>10<br>5 | 1:1<br>1:2<br>2:1 | 0<br>18<br>31 | 21<br>58<br>74 |
| $A+B_{12}$ | 5<br>5<br>10 | 2<br>5<br>5 | 2.5:1<br>1:1<br>2:1 | 7<br>38<br>69 | 37<br>66<br>92 |

Notes to Table 4:
(1) The values of the effectiveness of the single products have been recorded on Table 3.
(2) $E_m$=Observed effectiveness of the mixture.

**Claims**

1. Acaricidal mixtures with a synergistic effect, consisting of an association of compound 1-decyloxy-4-[(7-oxa-4-octinyl)-oxy]-benzene (A) with one of the following compounds:

$B_1$ - Tricyclohexyl-tin hydroxide (common name Cyhexatin);

$B_2$ - Hexakis (β,β-dimethylphenetyl)-distannoxane (common name Fenbutatin-oxide);

$B_3$ - N-(4-chloro-o-tolyl)-N',N'-dimethylformamidine (common name Chlordimeform);

$B_4$ - N'-(2,4-dimethylphenyl)-N-[(2,4-dimethylphenyl)-iminomethyl]-N-methylmethanimidamide (common name Amitraz);

$B_5$ - 4-chlorophenyl-4-chlorophenyl-sulphone (common name Chlorfenson);

$B_6$ - 2-(4-tert.butyl-phenoxy)-cyclohexyl-(2-propinyl)-sulphite (common name Propargite);

$B_7$ - N,N-dimethyl-N'-[3-(methylaminocarbonyl-oxy)-phenyl]-methanimidamide (common name Formetanate);

$B_8$ - Ethyl-O-benzoyl-3-chloro-2,6-dimethylbenzohydroxamate (common name Benzomate);

$B_9$ - 1,1-bis-(4-chlorophenyl)-2,2,2-trichloroethanol (common name Dicofol);

$B_{10}$ - O,O-Diethyl-S-(N-isopropylcarbamoylmethyl)-phosphorodithioate (common name Prothoate);

$B_{11}$ - O,O-dimethyl-S-(N-methylcarbamoylmethyl)phosphorodithioate (common name Dimethoate);

$B_{12}$ - Tricyclohexyl-(1,2,4-triazol-1-yl)-tin (common name Azocyclotin),

in a ratio comprised between 1:10 and 10:1.

2. Acaricidal compositions containing as active ingredient a mixture of acaricides according to claim 1, together with inert vehicles and optionally other additives for agricultural use.

3. Method for fighting mite infestation on agricultural or ornamental plants, consisting in distributing on the plants an effective amount of an acaricidal mixture according to claim 1, either as such or in the form of a suitable composition.

4. Method according to claim 3, characterized in that it is used against infestation by mites belonging to the *Tetranychidae* family, to the *Tetranychus* genera or to the *Panonychus* genera.

**Patentansprüche**

1. Acarizide Mischungen mit synergistischer Wirkung, bestehend aus einer Assoziation der Verbindung 1-Decyloxy-4-[(7-oxa-4-octinyl)-oxy]-benzol (A) mit einer der folgenden Verbindungen:

$B_1$: Tricyclohexyl-zinnhydroxid (Trivialname Cyhexatin);

$B_2$: Hexakis-(β,β-dimethylphenethyl)-distannoxan (Trivialname Fenbutatin-oxid);

$B_3$: N-(4-Chlor-o-tolyl)-N',N'-dimethylformidin (Trivialname Chlordimeform);

$B_4$: N'-(2,4-Dimethylphenyl)-N-[(2,4-dimethylphenyl)-iminomethyl]-N-methylmethanimidamid (Trivialname Amitraz);

$B_5$: 4-Chlorphenyl-4-chlorphenylsulfon (Trivialname Chlorfenson);

$B_6$: 2-(4-tert-Butylphenoxy)-cyclohexyl-(2-propinyl)-sulfit (Trivialname Propargit);

$B_7$: N,N-Dimethyl-N'-[3-(methylaminocarbonyl-oxy)-phenyl]-methanimidamid (Trivialname Formetanat);

$B_8$: Ethyl-O-benzoyl-3-chlor-2,6-dimethylbenzohydroxamat (Trivialname Benzomat);

$B_9$: 1,1-Bis-(4-chlorphenyl)-2,2,2-trichlorethanol (Trivialname Dicofol);

$B_{10}$: O,O-Diethyl-S-(N-isopropylcarbamoylmethyl)-phosphordithioat (Trivialname Prothoat);

$B_{11}$: O,O-Dimethyl-S-(N-methylcarbamoylmethyl)-phosphordithioat (Trivialname Dimethoat);

$B_{12}$: Tricyclohexyl-(1,2,4-triazol-1-yl)-zinn (Trivialname Azocyclotin),

in einem Verhältnis zwischen 1:10 und 10:1.

2. Acarizide Zusammensetzungen, enthaltend als aktiven Bestandteil eine Mischung von Acariziden gemäss Anspruch 1 zusammen mit inerten Trägern und wahlweise anderen Zusätzen zur landwirtschaftlichen Verwendung.

3. Verfahren zur Milbenbekämpfung auf landwirtschaftlichen oder Schmuckpflanzen, bestehend aus der Verteilung einer wirksamen Menge einer acariziden Mischung gemäss Anspruch 1, entweder als solche oder in Form einer geeigneten Zusammensetzung, auf den Pflanzen.

4. Verfahren nach Anspruch 3, dadurch gekennzeichnet, dass es gegen Infektionen durch Milben, die zur Tetranychiden-familie, zu den Gattungen Tetranychus oder zu den Gattungen Panonychus gehören, angewendet wird.

## Revendications

1. Mélanges acaricides présentant un effet synergique constitué de l'association du composé 1-décyloxy-4-[(7-oxa-4-octinyl)-oxy]-benzène (A) avec l'un des composés suivants:

$B_1$ - Hydroxyde de tricyclohexyl-étain (couramment nommé Cyhexatin);

$B_2$ - Hexakis (β-β-diméthylphénéthyl)-distannoxane (couramment nommé Fenbutatin-oxyde);

$B_3$ - N-(4-chloro-o-tolyl)-N',N'-diméthylformamidine (couramment nommé chlordiméforme).

$B_4$ - N'-(2,4-diméthylphényl)-N-[(2,4-diméthylphényl)-iminométhyl]-N-méthylméthanimidamide (couramment nommé Amitraz);

$B_5$ - 4-chlorophényl-4-chlorophényl-sulfone (couramment nommé Chlorfenson);

$B_6$ - 2-(4-tert.butyl-phénoxy)-cyclohexyl-(2-propinyl)-sulfite (couramment nommé Propargite);

$B_7$ - N,N-diméthyl-N'-[3-(méthylaminocarbonyl-oxy)phényl]-méthanimidamide (couramment nommé Formétanate);

$B_8$ - Ethyl O-benzoyl-3-chloro-2,6-diméthylbenzohydroxamate (couramment nommé Benzomate);

$B_9$ - 1,1-bis-(4-chlorophényl)-2,2,2-trichloroéthanol (couramment nommé Dicofol);

$B_{10}$ - O,O-diéthyl-S-(N-isopropylcarbamoylméthyl)-phosphorodithioate (couramment nommé Prothoate);

$B_{11}$ - O,O-diméthyl-S-(N-méthylcarbamoylméthyl)-phosphorodithioate (couramment nommé Diméthoate);

$B_{12}$ - Tricyclohexyl-(1,2,4-triazol-1-yl)-étain (couramment nommé Azocyclotine);

dans un rapport compris entre 1/10 et 10/1.

2. Compositions acaricides contenant comme ingrédient actif un mélange d'acaricides selon la revendication 1, en même temps que des véhicules inertes et éventuellement d'autres additifs à usage agricole.

3. Méthode de lutte contre l'infestation par les acariens de plantes agricoles ou ornementales, caractérisée en ce que l'on distribue sur les plantes une quantité efficace d'un mélange acaricide selon la revendication 1, soit en tant que tel, soit sous la forme d'une composition convenable.

4. Méthode selon la revendication 3, caractérisée en ce que l'on utilise dans la lutte contre l'infestation par les acariens appartenant à la famille des Tetranychidae, au genre Tetranychus ou au genre Panonychus.